# EUROPEAN PATENT APPLICATION

(11) **EP 1 365 334 A1**
(43) Date of publication of application: **26.11.2003**
(21) Application number: 01995045.0
(22) Date of filing: 28.12.2001
(51) Int. Cl.: G06F 17/60

(54) **AUTOMATIC EDITION SYSTEM**

(30) Priority: 02.03.2001 JP 2001059034
(71) Applicant: Foursis Business Promotion Kabushiki Kaisha, Tokyo 101-0045 (JP)
(72) Inventor: NAKANISHI, Naoya c/o Foursis Business Prom. K.K., Chiyoda-ku, Tokyo 101-0045 (JP); TOYOTA, Yuichi c/o Kabushiki Kaisha CCP, Cyuo-ku, Tokyo 104-0031 (JP)
(74) Representative: Klunker . Schmitt-Nilson . Hirsch
(86) International application number: JP0111663
(87) International publication number: WO02071288

(57) **Abstract**

A system for automatically editing and outputting page data for each of customers or the like by using a content to be arranged in a variable part within the page data to be automatically edited, customer data, marketing data and the like in the case where a user is to make a plurality of outputs such as prints by using the content. The user terminal is provided with an automatic editing system, and the database system provided in the state of being connected to the user terminal stores data for setting association indicating which content is to be arranged in the variable part included in the page data to be automatically edited when the page data are to be outputted in plural numbers. At the user terminal, the automatic editing system performs the processing of specifying a layout of the page data, the processing of gaining access to the contents database from the user terminal and performing acquisition of data for automatically selecting and outputting one or a plurality of desired contents from the contents database in accordance with the association indicating which content is to be arranged in the variable part within the page data to be automatically edited, and the processing of, in the processing of creating the page data in accordance with the layout data and providing a plurality of outputs, automatically selecting and inserting any of the contents into each of the plurality of outputs in accordance with the association as a content to be arranged in the variable part included in the page data to be automatically edited, and performing automatic editing and outputting.

## Description

### Technical Field

The present invention relates to an automatic editing system in which, when a user gains access to a computer network and is to make the desired layout, create page data and provide a plurality of outputs by using image files and other contents and layout information, association indicating which content is to be arranged in a variable part within the page data to be automatically edited is set in advance in a database of the user, to perform the processing of automatically selecting one or a plurality of desired contents from the user terminal and automatically selecting and inserting any of the contents into each'of the plurality of outputs, and providing the plurality of outputs.

### Background Art

In recent years, as the development of computer networks and communications environments proceeds, business such as commercial activities represented by the Internet is becoming more active. A multiplicity of web sites for shopping malls and auction sites are present, and various techniques such as settlement methods accompanying these sites are developed.

In addition to information equipment such as personal computers, portable information terminals, mobile phones, PHS telephones and further home electrical information appliances such as WEB-TVs or games have become popular. Some types of mobile phones are provided with browser functions so that web pages on the Internet can be browsed from mobile phones.

In these situations, more users are becoming able to access various contents through computer networks to browse contents, output contents by printing or the like, or acquire contents by downloading, so that the need for techniques relative to payment and copyright (or copyright royalty) for contents acquired on line is rapidly increasing. Systems which can distribute and browse various contents such as music through electronic networks have been developed.

In addition, means for accounting accompanying these contents, compression techniques for information to be distributed and so on, encryption techniques for protection of copyright, privacy information and the like, user interfaces which enable users to use contents by simple operation, and the like have been developed.

On the other hand, if these problems such as accounting processing are cleared, it is convenient for contents users and contents providers to be able to use various contents.

Furthermore, if contents can be freely selected and can also be freely laid out to be outputted as publications, a small number of booklets, posters, pamphlets, handbills, postal cards, letters, printed matter such as various documents or other edited print media, the convenience of contents will improve rapidly in terms of time and cost as well as in terms of production.

As a related art, for example, JP-A-2000-67138 "ON-DEMAND DOCUMENT DISTRIBUTING/ISSUING SYSTEM" discloses an art for realizing an improvement of the efficiencies of various application procedures and enabling acquisition of documents on demand by collectively managing paper documents and electronic documents.

According to the invention, a document database stores documents to be used in various application procedures, documents relative to these application procedures, and data relative to attributes which associate these documents with one another, and a user support navigation part has the function of, in accordance with a request inputted from a user terminal via the Internet, searching for the required document and an associated document from the document database, displaying the documents on the screen of the terminal, and supporting operations from writing of a document to submission of a created document, and an issuance system part has the function of receiving writing data from a transaction database, receiving the document format data for a document and writing position information from the document database, and issuing by a paper and digitally a document to which information is added in such a manner that both the data and the information are combined.

However, in the above-described art, in the processing of creating page data in accordance with layout data and providing a plurality of outputs, it is impossible to automatically select and insert any of contents into each of the plurality of outputs in accordance with the above-described association as a content to be arranged in a variable part included in the page data to be automatically edited, and perform automatic editing.

The above-described art does not disclose control techniques for performing accounting processing at the time when a user outputs a content, and if the user does not output a content, restricting the use of the content. Accordingly, protection and the like of copyright cannot be realized, and impediments to the provision and distribution of contents occur.

In addition, it is necessary to perform accounting processing corresponding to the size, resolution, output method and the like of a content during accounting, and if protection of a content on which accounting processing is not performed (namely, outputting and the like are not performed) is to be performed, the use of the content needs to be restricted.

In addition, if it is possible to construct a system which is efficient in performing accounting processing corresponding to the size, resolution, output method and the like of a content and which enables a content user to specify the size, resolution, output method and the like of the content at the time of accounting processing, the system becomes highly convenient for the user.

JP-A-11-352598 "PRINT PHOTOGRAPH PROCESSING METHOD USING THE INTERNET AND LABORATORY SYSTEM THEREFOR" discloses an art for providing a print photograph processing method using the Internet and a laboratory system therefor.

According to the invention, the laboratory system develops film, adds an ID unique among all laboratory systems, and accumulates image data. The laboratory system prints image data accumulated in an arbitrary laboratory system connected to the Internet. In this manner, in the invention of the present application, the laboratory system accumulates the image data and the image data are managed with an ID unique among all laboratory systems, and further, the laboratory systems are connected to one another via the Internet. Accordingly, a user who has obtained the consent of an owner of the image data can make a print with an arbitrary laboratory system.

However, in this invention as well, in the processing of creating page data in accordance with layout data and providing a plurality of outputs, it is impossible to automatically select and insert any of contents into each of the plurality of outputs in accordance with the above-described association as a content to be arranged in a variable part included in the page data to be automatically edited, and perform automatic editing. If different contents are to be inserted into individual outputs, it is necessary to specify a content for each output by manual operation.

In addition, it is necessary to perform the processing of temporarily downloading a content through the Internet and the processing of inserting the downloaded content into a layout.

The above-described art does not disclose control techniques for performing accounting processing at the time when a user outputs a content, and if the user does not output a content, restricting the use of the content. Accordingly, protection of copyright and the like cannot be realized, and impediments to the provision and distribution of contents occur.

In addition, it is necessary to perform accounting processing corresponding to the size, resolution, output method and the like of a content during accounting, and if protection of a content on which accounting processing is not performed (namely, outputting and the like is not performed) is to be performed, the use of the content needs to be restricted.

In addition, if it is possible to construct a system which is efficient in performing accounting processing corresponding to the size, resolution, output method and the like of a content and which enables a content user to specify the size, resolution, output method and the like of the content at the time of accounting processing, the system becomes highly convenient for the user.

JP-A-11-161673 "CATALOG CREATING SYSTEM" discloses an art for reducing the time required to create a catalog.

According to the invention, catalog data for creating a catalog in a WWW server connected to the Internet are collectively managed as a catalog database, and when a user connects to the WWW server from a browser of a personal computer, the catalog database is operated according to an input content on a predetermined input screen while the input screen is being displayed. Accordingly, it is possible to provide a catalog creating system which can share the contents of the contents database in real time and can create a catalog easily and in a short time.

However, in this invention as well, in the processing of creating page data in accordance with layout data and providing a plurality of outputs, it is impossible to automatically select and insert any of contents into each of the plurality of outputs in accordance with the above-described association as a content to be arranged in a variable part included in the page data to be automatically edited, and perform automatic editing. If different contents are to be inserted into individual outputs, it is necessary to specify a content for each output by manual operation.

In addition, it is necessary to perform the processing of temporarily downloading a content through the Internet and the processing of inserting the downloaded content into a layout.

In addition, the above-described art does not disclose control techniques for performing accounting processing at the time when a user outputs a content, and if the user does not output a content, restricting the use of the content. Accordingly, protection of copyright and the like cannot be realized, and impediments to the provision and distribution of contents occur.

In addition, it is necessary to perform accounting processing corresponding to the size, resolution, output method and the like of a content during accounting, and if protection of a content on which accounting processing is not performed (namely, outputting and the like is not performed) is to be performed, the use of the content needs to be restricted.

In addition, if it is possible to construct a system which is efficient in performing accounting processing corresponding to the size, resolution, output method and the like of a content and which enables a content user to specify the size, resolution, output method and the like of the content at the time of accounting processing, the system becomes highly convenient for the user.

Furthermore, as a technique relative to accounting processing during printing, for example, JP-A-11-119937 "NETWORK PRINTER" discloses an art for enabling accounting management to be correctly performed in a multiprotocol network printer.

According to this invention, it is possible to correctly perform accounting management by providing the network printer with a network adapter which has: a communication protocol part which receives multiprotocol communication print data including accounting information and print target data, a communication application part which adds a print processing command to communication print data and outputs the communication print data, and accounting management protocol selecting means for outputting a communication protocol selected by a user and only communication data in a communication application when accounting management is to be performed; a controller which receives and outputs the communication print data outputted from the network adapter; a printing part which prints the print target data; and an accounting management part which acquires the accounting information from the printing part.

In this manner, the network printer is realized which can perform accounting management by using the multiprotocol communication print data including the accounting information and the print target data, but the above-described related art does not disclose an art which is efficient in performing accounting processing corresponding to the sizes, resolutions, output methods and the like of contents and which enables content users to specify the sizes, resolutions, output methods and the like of the contents at the time of accounting processing, the data structures of such contents, and a technique for accounting using the contents data.

Furthermore, there is a case where when editing work using contents is performed and output such as printing on a paper medium or the like is performed, a user desires to arrange different contents in a layout according to different uses or use purposes in various documents such as handbills, direct mail of companies and letters of advice.

As one example, there is a case where in printed matter such as direct mail to customers, different images are to be arranged for individual customers to whom the printed matter is to be sent, or a case where in handbills or the like of a store, different contents are to be arranged for individual districts.

To achieve the above-described problems, an object of the invention is to provide an automatic editing system in which when a user is to perform editing processes on various documents such as handbills, direct mail of companies and letters of advice and perform output such as printing on a paper medium or the like, the desired contents are searched for, extracted and selected, and also, when a plurality of outputs are to be produced, association indicating which contents are to be arranged in a variable part within page data to be automatically edited is set in advance in a user-side database and created page data are outputted.

The invention provides an automatic editing system in which when a user gains access to a computer network and is to make the desired layout, create page data and provide a plurality of outputs by using image files and other contents and layout information, association indicating which content is to be arranged in a variable part within the page data to be automatically edited is set in advance in a database of the user, to perform the processing of automatically selecting one or a plurality of desired contents from the user terminal and automatically inserting any of the contents into each of the plurality of outputs, and providing the plurality of outputs.

In addition, the above-described processing can be performed without performing the processing of temporarily downloading a content through the Internet or the processing of inserting the downloaded content into a layout.

In addition, the invention provides an automatic editing system in which accounting processing at the time of outputting or the like is performed by performing acquisition of data for selecting and outputting a content to be arranged in a layout for creating page data and performing automatic editing processing, and in addition, accounting processing corresponding to the size, resolution, output method and the like of the content can be performed, and in the case where accounting processing is not performed (namely, acquisition, output or the like of data is not performed), protection of the content is effected.

### Disclosure of the Invention

To solve the above-described problems, the invention described in claim 1 is characterized by an automatic editing system characterized by including a user computer system made of a system which includes a user terminal which is a client, a database provided in the state of being connected to the user terminal, and output means;
a computer network to which a user connects from the user terminal; and
a contents server to be accessed via the computer network,
the contents server being provided with a contents database in which contents are stored;
the user terminal being provided with an automatic editing system for editing page data;
the database system provided in the state of being connected to the user terminal storing data for setting association indicating which content is to be arranged in a variable part in the page data to be automatically edited when the page data are to be outputted in plural numbers;
at the user terminal, the automatic editing system performing:
the processing of specifying a layout of the page data;
the processing of gaining access to the contents database from the user terminal and performing acquisition of data for automatically selecting and outputting one or a plurality of desired contents from the contents database in accordance with the association indicating which content is to be arranged in the variable part within the page data to be automatically edited; and
the processing of, in the processing of creating the page data in accordance with the layout data and providing a plurality of outputs, automatically selecting and inserting any of the contents into each of the plurality of outputs in accordance with the association as a content to be arranged in the variable part included in the page data to be automatically edited, and performing automatic editing and outputting.

To solve the above-described problems, the invention described in claim 2 is characterized in that the invention described in claim 1 is an automatic editing system characterized in that the contents server is provided with the contents database in which the contents are stored, and a layout information database in which layout information is stored.

To solve the above-described problems, the invention described in claim 3 is characterized in that the invention according to claim 1 or 2 is an automatic editing system characterized in that the contents server is constructed as a plurality of servers which are arranged in a distributed manner via the computer network.

To solve the above-described problems, the invention described in claim 4 is characterized in that the invention described in any of claims 1 to 3 is an automatic editing system characterized in that the contents stored in the contents server arranged in the distributed manner have a predetermined format data structure, and
in that in the processing of gaining access to the contents database from the user terminal and performing acquisition of data for automatically selecting and outputting one or a plurality of desired contents from the contents database via the user terminal in accordance with the association indicating which content is to be arranged in the variable part within the page data to be automatically edited,
the contents at least include data for searching for the contents in accordance with the association and performing decision processing as to which content is to be arranged in the variable part in the page data to be automatically edited.

To solve the above-described problems, the invention described in claim 5 is characterized in that the invention described in any of claims 1 to 4 is an automatic editing system characterized in that the data which are stored in the database system provided in the state of being connected to the user terminal and are used for setting the association indicating which content is to be arranged in the variable part within the page data to be automatically edited when the page data are to be outputted in plural numbers include data relative to a plurality of targets who are to be provided with automatically edited and outputted page data, and setting data for establishing association with contents for the purpose of automatically editing the page data for individual targets,
the page data automatically edited for the individual targets being outputted in accordance with the data stored in the database system.

To solve the above-described problems, the invention described in claim 6 is characterized in that the invention described in claim 5 is an automatic editing system characterized in that the data stored in the database system provided in the state of being connected to the user terminal are data including marketing data for outputting advertisement, direct mail, company information, catalogs or other page data for the individual targets.

To solve the above-described problems, the invention described in claim 7 is characterized in that the invention described in claims 1 to 6 is an automatic editing system characterized in that the database system provided in the state of being connected to the user terminal further stores data for setting the association indicative of which layout is suited for the content included in the page data to be automatically edited when the page data are to be outputted in plural numbers, and in that in the processing of creating and outputting a plurality of page data in accordance with the layout data, the content to be arranged in the variable part included in the page data to be automatically edited is processed in such a manner that any one of layouts is automatically selected and the content is inserted for each of a plurality of outputs in accordance with the association and an automatically edited output is provided.

To solve the above-described problems, the invention described in claim 8 is characterized in that the invention described in claims 1 to 7 is an automatic editing system according to any of claims 1 to 7, characterized in that the system is further provided with a commerce server for performing accounting management in linkage to the contents server,
the system performing accounting processing by outputting the created page data.

To solve the above-described problems, the invention described in claim 9 is characterized in that the invention described in claims 1 to 8 is an automatic editing system according to any of claims 1 to 8, characterized in that during the processing of performing accounting processing by performing output of the created page data, decoding of the content is performed at the user terminal.

To solve the above-described problems, the invention described in claim 10 is characterized in that the invention described in claims 1 to 9 is an automatic editing system according to any of claims 1 to 9, characterized in that the contents are contents encoded in a unique format decodable with a decode key.

To solve the above-described problems, the invention described in claim 11 is characterized in that the invention described in claim 10 is an automatic editing system characterized in that the contents include attribute information for controlling the use of the contents and are decoded when control for restricting the use of the contents is cancelled with the decode key.

To solve the above-described problems, the invention described in claim 12 is characterized in that the invention described in claim 10 or 11 is an automatic editing system characterized in that decoding and accounting relative to the contents are performed specifying one or plurality of use conditions of output methods, sizes of contents, resolutions, the number of outputs and other detailed conditions.

To solve the above-described problems, the invention described in claim 13 is characterized in that the invention described in claims 10-12 is an automatic editing system according to any of claims 10 to 12, characterized in that each of the contents includes sample data of the content, data of a content body, accounting information relative to the price of the use of the content, attribute information relative to control of the use of the content, and a unique ID for identifying the content.

To solve the above-described problems, the invention described in claim 14 is characterized in that the invention described in claims 10 to 12 is an automatic editing system according to any of claims 10 to 12, characterized in that each of the contents includes sample data of the content, URL information for locating a content body, accounting information relative to the price of the use of the content, attribute information relative to control of the use of the content, and a unique ID for identifying the content.

To solve the above-described problems, the invention described in claim 15 is characterized in that the invention described in claims 10 to 12 is an automatic editing system according to any of claims 10 to 12, characterized in that each of the contents includes sample data of the content, a content address ID for identifying the address of a content body on a network, accounting information relative to the price of the use of the content, attribute information relative to control of the use of the content, and a unique ID for identifying the content.

To solve the above-described problems, the invention described in claim 16 is characterized in that the invention described in claims 1 to 14 is an automatic editing system according to any of claims 1 to 14, characterized in that the processing in which the user selects the desired layout and selects the desired content from the contents performs the processing of performing search with a keyword or a content ID and extraction from the contents stored in the contents database and then selecting the desired content.

To solve the above-described problems, the invention described in claim 17 is characterized in that the invention described in claims 1 to 16 is an automatic editing system according to any of claims 1 to 16, characterized in that the processing of performing authentication of the user when accounting processing is to be performed by outputting the created page data, the authentication is performed with a hardware key provided in the user terminal.

### Brief Description of Drawings

Fig. 1 is a system construction diagram showing one example of a basic system construction of a contents accounting system of the invention;
Fig. 2 is a system block diagram showing the basic construction and function of the system according to the invention;
Fig. 3 is flowchart showing the flow of the basic processing of an automatic editing system of the invention;
Fig. 4 is flowchart showing the flow of the basic processing of the automatic editing system of the invention;
Fig. 5 is flowchart showing the flow of the basic processing of the automatic editing system of the invention;
Fig. 6 is a system conceptual diagram showing the flow of the processing of one example in which the layout of a piece of direct mail folded in three is edited;
Fig. 7 is a system conceptual diagram showing the flow of the processing of one example in which the layout of a piece of direct mail folded in three is edited;
Fig. 8 is a system conceptual diagram showing the flow of the processing of one example in which the layout of a piece of direct mail folded in three is edited;
Fig. 9 is a data structure diagram showing one example of the data structure of a content which includes sample data of the content, data of a content body, accounting information relative to the price of the use of the content, and a unique ID for identifying the content;
Fig. 10 is a data structure diagram showing one example of a content which includes sample data of the content, URL information for locating a content body, accounting information relative to the price of the use of the content, and a unique ID for identifying the content;
Fig. 11 is a data structure diagram showing one example of a content which includes sample data of the content, a content address ID for identifying the address of the content on a network, accounting information relative to the price of the use of the content, and a unique ID for identifying the content;
Fig. 12 is a view showing information which is set in the IC chip of USB in the case where a USB key is used as one example of an authentication key; and
Fig. 13 is a block diagram showing one example of the flow of data along which, at a user terminal which downloads an image content, attribute information included in the content is detected and interpreted, and decoding and outputting are performed in accordance with the attribute information relative to the control of the use of the content.

### Best Mode for Carrying Out the Invention

Embodiments of the invention will be described below with reference to the accompanying drawings.

The invention provides a system for enabling a user to connect to and gain access to a computer network from a user terminal, and the system is provided with a contents server for storing contents. The contents server can take not only the form of being present at one location but also the form of a distributed database using distributed servers.

For example, similarly to the invention described in claim 3, the contents server can be constructed as a plurality of servers which are arranged in a distributed manner via the computer network. In this case, the plurality of servers arranged in a distributed manner can be equipment provided by an entrepreneur such as the same system manager, or can also be equipment provided by another entrepreneur.

Such an entrepreneur is not necessarily limited to a profit-making entrepreneur, and if, as described in claim 4 in particular, the contents stored in the contents servers arranged in a distributed manner employ contents having a predetermined format data structure, anyone can provide a server and a storage device which are connected to the computer network.

In addition, it is desirable that the system be provided with a commerce server for performing accounting management relative to the use of contents, in linkage to each of the above-described databases.

In the case where this system construction is adopted, similarly to the invention described in claim 8, the above-described system is characterized by being further provided with a commerce server for performing accounting management in linkage to the above-described contents server, the system performing accounting processing by performing output of page data created.

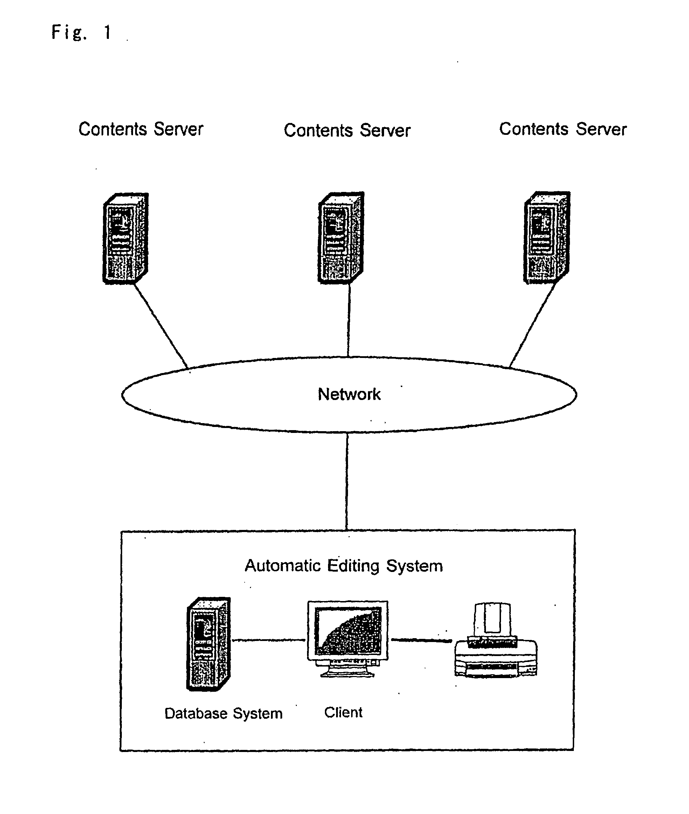

Fig. 1 is a system construction diagram showing one example of a basic system construction of a contents accounting system of the invention.

In the automatic editing system of the invention, the contents server is a storage device for storing the above-described various contents. The contents server is provided with a contents database in which contents are stored.

In the invention, as will be described later, the contents can include not only image files, character information files, motion image files, audio files, animation image files, a combination of these files, game contents, web contents, programs or modules which constitute the programs, databases, and various other contents.

As described previously, in the invention described in claim 4, the contents stored in the contents server have the following format.

Namely, the contents have a predetermined format data structure, and when the above-described page data are to be outputted in plural numbers, in the processing of performing acquisition of data for automatically selecting and outputting one or a plurality of desired contents from the contents database via a user terminal in accordance with the above-described association indicating which content is to be arranged in a variable part within the page data to be automatically edited, the contents at least include data for searching for the contents in accordance with the association and performing decision processing as to which content is to be arranged in the variable part in the page data to be automatically edited.

The data for searching for the contents in accordance with the association and performing decision processing as to which content is to be arranged in the variable part in the page data to be automatically edited include a genre or a keyword indicative of what the contents are, a file name, an extension indicative of the data format of the contents, resolution, a data size, a price to be charged for the output and use of the contents, and various other data.

In the automatic editing system of the invention, similarly to claim 2, the contents server can be provided with the contents database in which the contents are stored, and a layout information database in which layout information is stored.

Otherwise, the layout information server in which layout information is stored can also be provided separately of the contents server in which contents are stored.

Incidentally, the layout information database, in linkage to the automatic editing system provided in a user terminal to be described later, can be provided in a storage device provided in the user terminal or a storage device provided in the state of being connected to the user terminal.

The basic hardware construction of the server of the invention includes, on the computer network, a contents database for storing contents such as images, and a layout database which stores layout information necessary for a user to arrange a desired content.

In addition, as occasion demands, the system can be provided with a commerce server for managing information about users and information about the use and purchase of contents by the users, a large-scale database server, an image storage and distribution server, a web server, a mail server, an application server, a search server, an authentication server and the like, and as occasion demands, each of the servers is desirably constructed in a multiple arrangement for securing safety.

Incidentally, this is one example of the desirable constructions, and as long as it is possible to realize the function of each server which will be described below in detail, servers may also adopt different constructions because the locations of servers can be identified by their URLs or the like.

The servers such as the contents server, the layout information server, the web server and the commerce server may be present at physically the same location, but even in the case where such servers are present at physically or spatially separate locations, the system of the invention can be realized because the locations of the servers can be identified by their URLs or the like.

In addition, as long as a similar function can be realized in such a manner that, for example, a single server is made to function as a contents server and a layout information server, various constructions can be adopted.

In addition, a user computer system which includes a user terminal for enabling a user who desires to use contents to connect to and gain access to the computer network, and output means such as a printer to be connected to the user terminal for the purpose of outputting page data by using the contents and layout information is provided in the state of being connected to the computer network such as the Internet.

The user terminal is provided with control means for controlling an application program including an OS and the automatic editing system, storage means for storing the above-described program, the created page data and the like as occasion demands, input/output means and connecting means for enabling connection to a user terminal via a communication line or enabling connection to the Internet, display means such as a display, input means such as a keyboard, and output means such as a printer. The user can make use of the system using the contents database and the layout information database provided by the system of the invention, by connecting to the Internet via a server.

The above-described user terminal is provided with the automatic editing system.

The automatic editing system is an application program for automatic editing for DTP software or the like.

In the invention described in claim 7, the above-described database system provided in the state of being connected to the user terminal is further characterized by storing data for setting association indicative of a layout in which to arrange a content included in the page data to be automatically edited when the page data are to be outputted in plural numbers, and in the processing of creating and outputting a plurality of page data in accordance with the above-described layout data, contents to be arranged in the variable part included in the page data to be automatically edited are processed in such a manner that any one of layouts is automatically selected and contents are inserted for each of a plurality of outputs in accordance with the association, and the page data are outputted.

The feature of the invention is that a text, an image and other contents included in a contents database such as an image DB are edited by using the automatic editing system provided in the user terminal. The function of editing a text included in a layout into a vertical written format, a horizontal written format, a format with kana readings written beside the text, a subscripted format, and the direction, the size and the like of a sheet to be outputted are created according to the desired layout of the user.

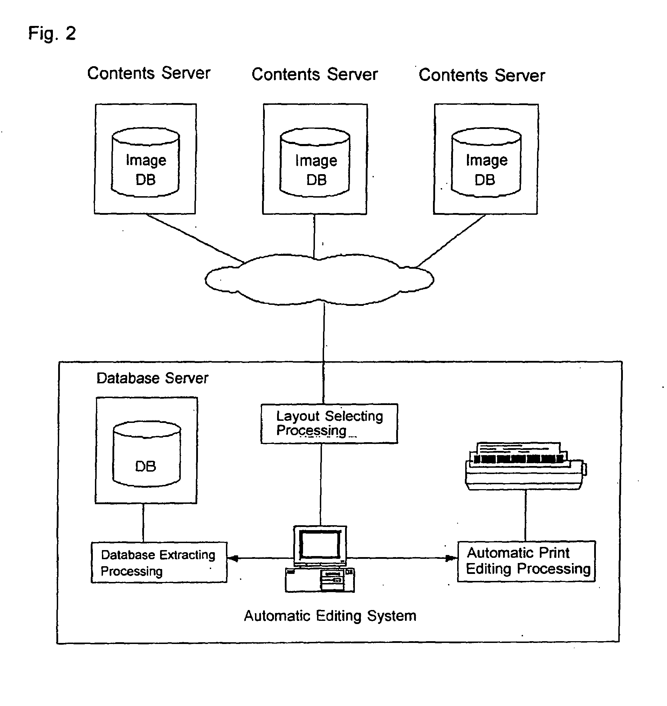

Fig. 2 is a system block diagram showing the basic construction and function of the system according to the invention.

In the system of the invention, processing at the user terminal is performed as processing for each of the following phases:
1 layout selecting processing,
2 database extracting processing,
3 automatic editing processing.

In addition, the database system provided in the user computer system stores output setting data for setting association indicating which content is to be arranged in a variable part in the page data to be automatically edited when the above-described page data are to be outputted in plural numbers.

Selection for specifying how to arrange which content is realized by processing for performing acquisition of data for the purpose of accessing the above-described contents server from the user terminal and outputting contents.

In addition, it is desirable that accounting processing and authentication processing during the use of contents be performed, and such processing is a general embodiment.

The function of the contents server includes the following processing.

(1) The contents server transfers a request for image distribution service from a user (browser) to a commerce server.

In the system of the invention, it is general to provide a portal site to be accessed by a user to use and purchase contents. The user browses and selects samples of layout information and the like. If the user selects layout information as the result of selection, the contents server performs acquisition of the layout information.

(2) In the case of an embodiment in which the commerce server which will be described later performs authentication processing and accounting processing for the user, the contents server accepts a processing request from the commerce server, and sends the result of processing to the commerce server and transfers the answer from the commerce server to the user.

(4) The contents server performs registration, encoding, updating and deletion of contents.

Further, the contents server and the commerce server may also be realized as separate server systems, functions provided in a single system, or distributed servers.

In the case where the commerce server is provided, its function includes the following processing.
(1) The commerce server accepts a request for processing from the contents server, and sends a result of processing to the contents server.
(2) The commerce server performs authentication of a user (an authentication server function).
(3) The commerce server performs registration, updating and deletion of the user.
(4) The commerce server manages accounting information of the user as to image distribution service (for example, user ID, date of use, image number, image size, resolution, term of validity, method of outputting or using a print output or the like) (accounting server).
(5) The commerce server manages registration information of the contents.
(6) The commerce server manages an image distribution service log of the user.

According to the above-described construction, when the user is to perform editing processes on various documents such as handbills, direct mail of companies and letters of advice and perform output such as printing on a paper medium or the like by using the automatic editing system of the invention, the desired contents are searched for, extracted and selected, and in the case where a plurality of outputs are to be produced, the user performs setting in advance through a user-side database as to which contents are to be arranged in a variable part within page data to be automatically edited, whereby one or a plurality of desired contents are automatically selected from the user terminal and any of the contents is automatically inserted into each of the plurality of outputs, and the plurality of outputs are provided.

Contents (images, motion images, software and the like) to be used in the contents accounting system of the invention will be described below.

Contents to be used in the invention include character data, still image data, motion image data, animation image data, presentation data, slide data, audio data, game software, application program software, and various other data, and conform to, for example, the following file formats.

The file formats of still images are, for example, JPEG (Joint Photographic Experts Group), PICT (QuickDraw Picture Format), BMP (Bitmap), GIF (Graphics Interchange Format) and PNG (Portable Network Graphics).

The file formats of motion images are, for example, MPEG-1, MPEG-2, MPEG-4, RV (Real Video), MNG (Multiple-image Network Graphics) and AVI (Audio Video Interleaved).

The file formats of sounds are, for example, AIFF (Audio Interchange File Format), WAV (Waveform), AU, RA (Real Audio), MPEG-1 audio compression format, MPEG-2 audio compression format, and MPEG-4 audio compression format.

File formats of multiplexing methods for motion images and sounds are, for example, QUICKTIME, MPEG-1 and MPEG-2PS.

One example of documents file formats is PDF (Portable Document Format), and formats such as zip and lzh are known as file formats with archive functions.

Various file formats other than the above-described ones can also be used.

It has heretofore been common practice that these files are provided with not only the data of contents themselves but also information such as file names, file creation date/time, file creator's names.

In the invention, as will be described later, in the embodiment of the invention described in claims 6-8, by adopting data structures which will be described later, it is possible to realize appropriate accounting according to the sizes of contents, resolutions, output methods and other detailed conditions.

In addition, the invention described in claim 10 is characterized in that the contents are contents encoded in a unique format decodable with a decode key.

In addition, the invention described in claim 11 is characterized in that the contents include attribute information for controlling the use of the contents and are decoded when control for restricting the use of the contents is cancelled with the decode key.

### (Content Embodiment 1)

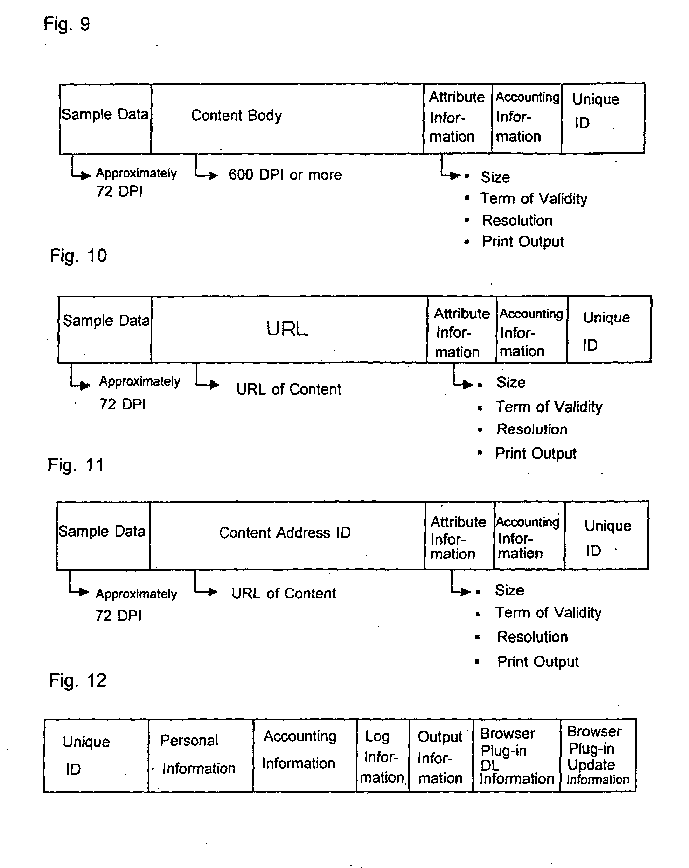

The data structure of each of the contents described in claim 13 is shown in Fig. 9 as one example, and includes sample data of the content, data of a content body, accounting information relative to the price of the use of the content, attribute information relative to control of the use of the content, and a unique ID for identifying the content.

A desirable example of a data format is as follows: the sample data is an image of JPEG format with a resolution of 72 dpi or more, and the data (herein, an image) of the content body is an image of original format having a resolution of 600 dpi or more.

Conventionally, in the case where a content such as an image is to be displayed on a web, small images (of low resolution) are displayed as thumbnails and a content body such as an image is displayed, as by clicking on an image to be viewed from among the thumbnails. However, these images are separate images, i.e., content images and thumbnail images, are separately stored.

In the above-described embodiment, these are managed as one data, and are assigned a unique ID which makes it possible to uniquely identify a particular content from among a multiplicity of contents, and further, the use fee of contents for each of output/use methods such as printing, or for each of output sizes, or for the size and resolution of each of the contents, i.e., the above-described accounting information, is managed as one record of data.

One record at least includes the sample data, the data of the content body, the accounting information, the attribute information and the field of the unique ID, and a code for identifying the sample data and the like during reading of these data are generally provided, whereby the invention solves the above-described various problems.

The data structures of the contents described in other claims of the invention are also similar.

### (Content Embodiment 2)

The data structure of each of the contents described in claim 14 is shown in Fig. 10 as one example, and includes sample data of the content, URL information for locating a content body, accounting information relative to the price of the use of the content, attribute information relative to control of the use of the content, and a unique ID for identifying the content.

A desirable example of a data format is as follows: the sample data is an image of JPEG format with a resolution of 72 dpi or more, and the data (herein, an image) of the content body is an image which is present at a location specified by the above-described URL.

### (Content Embodiment 3)

The data structure of each of the contents described in claim 15 is shown in Fig. 11 as one example, and includes sample data of the content, a content address ID for identifying the address of a content body on a network, accounting information relative to the price of the use of the content, attribute information relative to control of the use of the content, and a unique ID for identifying the content.

A desirable example of a data format is as follows: the sample data is an image of JPEG format with a resolution of 72 dpi or more, and the data (herein, an image) of the content body is an image which is present at a location specified by the above-described content address ID. The content address ID is placed under data management based on a database in a storage device such as a database server, and an ID assigned to each content and data for specifying an URL at which the content is located or the location of the content on a network such as an LAN are stored in an mutually associated manner. The location of the content body is specified by referring to the above-described database while using the content address ID as a key.

In any of the contents described in claims 13-15, the accounting information provided in the content can include one or a plurality of data from among the following data.

The data are content size, term of validity, resolution, output method, and other conditions.

In addition, the attribute information relative to control of the use of the content is attribute information for restricting users of the contents to, for example, members, attribute information for controlling the distribution or use of the content, and the like.

The above-described contents include various forms such as image data, motion image data, animation image data, audio data, character data, computer game software, a computer program, or a combination of these data.

The flow of the processing of the automatic editing system of the invention will be described below with reference to a predetermined embodiment.

In the following description, reference will be made to one example in which image data is used as a content and automatic editing is performed on the basis of image contents stored in an image database provided in a contents server.

Incidentally, the flow of the processing described below is merely one example and is not limited to this example.

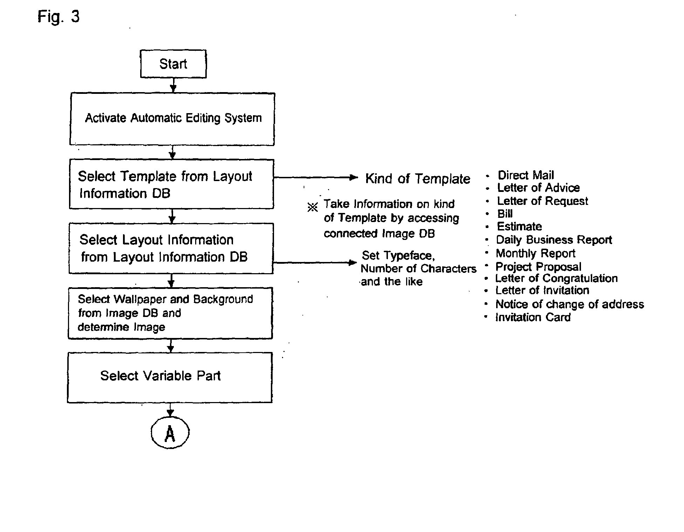

Figs. 3-5 are flowcharts showing the flow of the basic processing of the automatic editing system of the invention.

First of all, in Fig. 3, the application program of the automatic editing system provided in a user terminal is activated.

A web site or the like which is first accessed by a user from the user terminal is generally a location which provides services such as provision of contents and layout information and performs accounting on the use of the system of the invention, and the user who desires to make an output such as a print automatically edited by using contents gains access to the contents server of the system of the invention, as by inputting an URL in a browser provided in the terminal of the user, which is connected to a network.

The term "terminal of the user" includes not only a computer terminal such as a personal computer but also a portable information terminal such as a mobile phone provided with a browsing function, a dedicated terminal, a home electrical information appliance such as WEB-TV or a game, and various other terminals.

Then, the processing of selecting and specifying a layout for page data is performed at the user terminal.

As described above, in a general embodiment, the contents server or a layout information server which stores layout information and is provided separately from the contents server for storing contents is provided with a layout information database in which the layout information is stored.

The layout information is a template or setting information which specifies the output size of page data to be automatically edited and outputted, the direction of a sheet or the like, the margins of the sheet, an arrangement position in which to arrange a content such as an image, a text such as a sentence and other contents, the size of the arrangement position, the designation of the line feed, the paragraph, the line spacing and the character spacing of the sentence, the kind of font, a font size, lettering and other layouts.

Fig. 3 shows the flow of the processing of first selecting a template for direct mail, a letter of greeting, a letter of advice or the like, and then selecting and specifying setting information for setting the typeface and the size of characters to be arranged in the template, the designation of the line feed, the paragraph, the line spacing and the character spacing of a sentence, lettering and other layouts.

Fig. 3 also shows an example of a flow for selecting a content such as an image to be used as a background (wall paper or a background), from the contents server by operation at the user terminal. However, it is also possible to perform acquisition of data so that the content such as a background can be automatically selected and outputted by automatic editing processing which will be described later. For example, the processing of automatically selecting a background image corresponding to a season and arranging the background image in a layout can be performed.

In the layout information, a layout is set in such a way that the application program of the automatic editing system provided in the user terminal acquires data.

It is desirable that the set layout can be viewed on a preview screen when the layout is selected and the layout information are acquired.

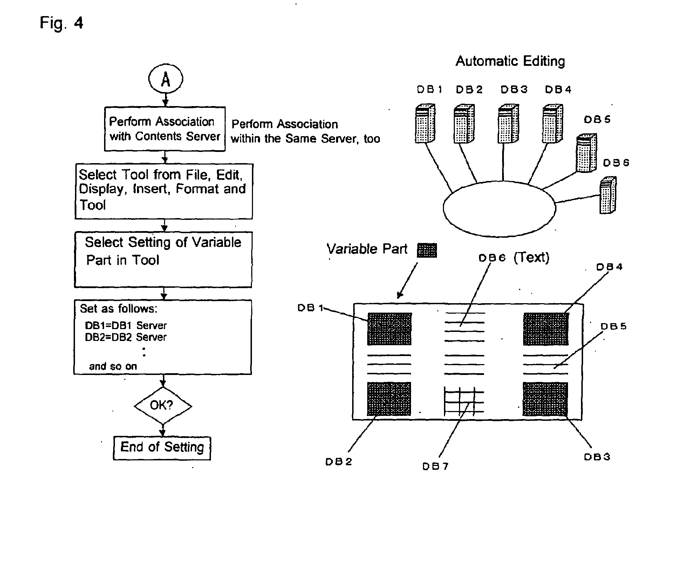

In addition, as shown in Fig. 4, since the application program of the automatic editing system acquires the layout information, the user can perform setting and operation for editing or the layout information can be displayed on the display means of the user terminal by a print output preview screen or the like so that the user can confirm the layout information.

Incidentally, at a web site or the like which provides the service of the system of the invention, it is desirable that users who receive service for the use of contents register their member information and register for membership. The member information includes addresses, names, telephone numbers, e-mail addresses, accounting (settling) methods and other information.

On the basis of the registration and management of such member information, authentication keys for authentication and contents accounting are issued.

Incidentally, it is desirable that in the form where such an authentication key is issued on line, the user perform input or the like of member information at the above-described portal site and transmit the member information, and after the transmitted member information is stored in a commerce server and this information passes an examination or the like, the authentication key be issued.

Authentication will be described later.

When the user is to select and use the layout information, the user may be allowed to access the web site which provides contents, in order to connect to the contents server, and perform search and extraction of the layout information such as the kind and the size of page data to be outputted, according to the desired genre, contents and kinds such as direct mail, flyers, postal cards or catalogs.

In addition, as described above, various layouts in which to arrange contents may also be realized by providing the automatic editing system of the user terminal with layout information. In addition, it is also preferable to adopt the form in which layout information is downloaded from a contents server and the layout information is provided in the automatic editing system of the user terminal.

In the system of the invention, the above-described database system provided in the user computer system stores output setting data for setting association indicating which content is to be arranged in a variable part in the page data to be automatically edited when the above-described page data are to be outputted in plural numbers.

The database system stores, for example, a customer list, an expected customer list and various member lists for sending printed matter using output page data, such as direct mail, letters of advice and postal cards, marketing data for performing marketing analysis, utilization of data and the like in linkage to those databases, or commodity information and service information for sending messages by direct mail or the like, various fixed forms of wording, different greeting letters for different addressees, and various other data. Although an example of direct mail and an example of marketing data are referred to herein, the kind of data is not limited to these examples, and includes various data which are output setting data for setting association indicating which content is to be arranged in a variable part in the page data to be automatically edited.

The database may be a single database, or may also have the form in which data are stored in a single table or the form in which data are stored in a plurality of tables so that it is possible to perform data extraction and the like which uses a combination of various data based on a relation database and the like and a combination of conditions.

On the basis of these data, in accordance with the association indicating which content is to be arranged in a variable part in the page data to be automatically edited, the automatic editing system at the User terminal gains access to the contents database from the user terminal, and performs the processing of automatically selecting one or a plurality of desired contents and acquiring data for performing output at the user terminal.

Selection of a variable part in the page data to be automatically edited is realized by selecting a predetermined part of a layout at the user terminal, as shown in the screen image of Fig. 4. A single variable part or a plurality of variable parts may be selected.

It is assumed here that a content such as an image corresponding to an addressee to whom page data is to be sent and so on is arranged in the variable part for each page of page data to be outputted. It is also assumed that the content is acquired from the contents server.

Otherwise, in the variable part, it is also possible to use text data such as wording stored in association with data stored in the above-described database system or a database system, or other data.

The processing of selecting a variable part and the processing of automatically selecting a content from a contents server on the basis of the above-described database system, acquiring data and outputting automatically edited page data will be described below more specifically.

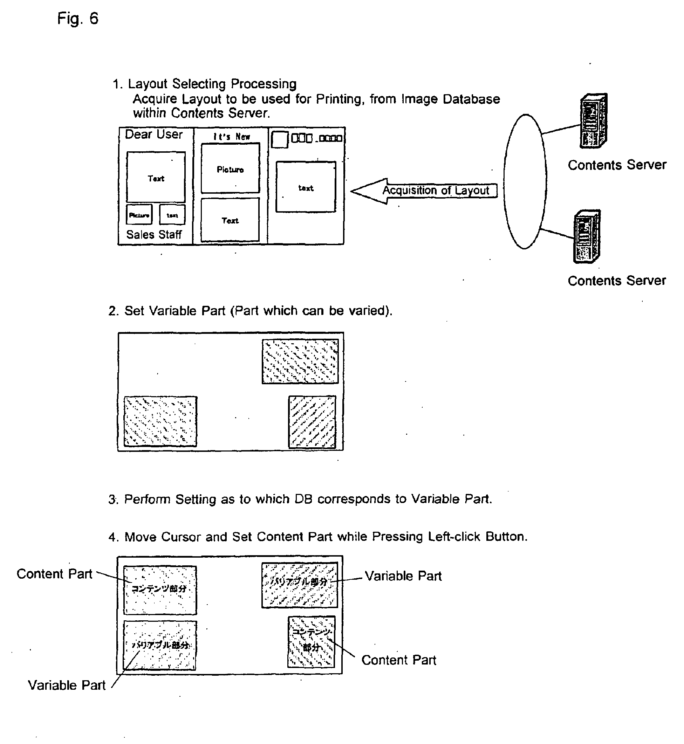

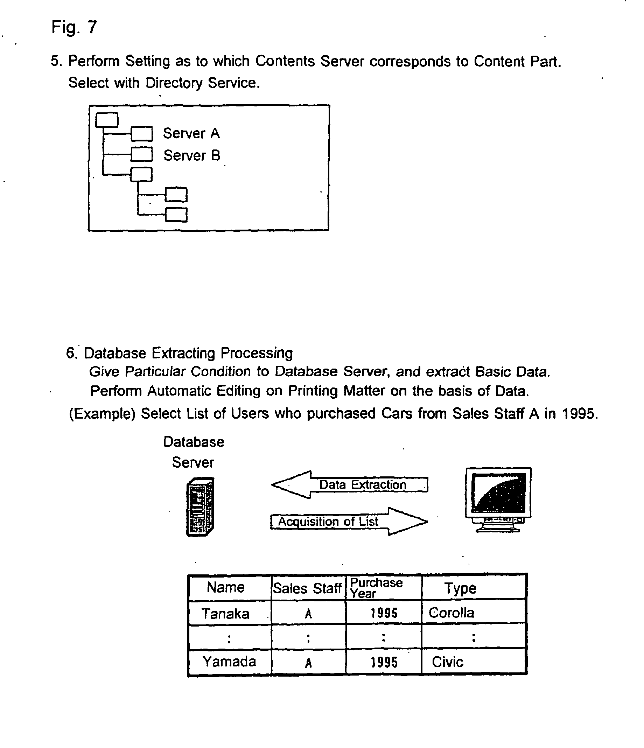

Figs. 6-8 are system conceptual diagrams showing one example of the flow of the processing of editing the layout of a piece of direct mail which is folded in three.

One example of setting of a variable part will be described with reference to Fig. 6.

By way of example, Fig. 6 shows one example in which the layout of a piece of direct mail folded in three is edited, and in the case of printing of a number of pieces of direct mail to be sent, invariable parts in each of which the same content is to be laid out and variable parts in each of which different contents are to be arranged for different addressees are set in each of the pieces of direct mail to be sent to all addressees.

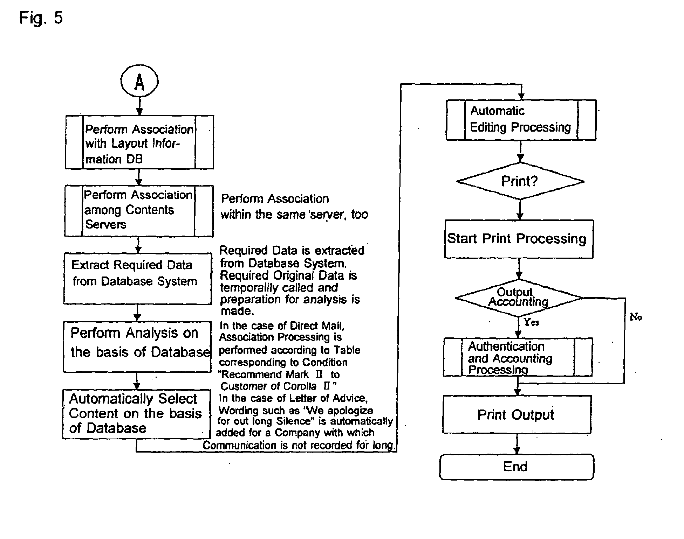

Then, in Fig. 5, association with contents servers is established. For example, in the case where one or a plurality of variable parts, for example, variable parts A to D are included in page data, association is set as follows: the variable part A uses contents of an image database aa of a contents server a, the variable part B uses contents of an image database ab of the contents server a, and the variable part C uses contents of an image database bb of a contents server b.

Otherwise, by setting keywords included in the data of contents without specifying contents servers whose data are to be used, it is also possible to realize setting of association as follows: the variable part A uses image contents with a keyword "OO", and the variable part B uses image contents with a keyword "OO" and a keyword "OOO".

The processing of arranging contents such as images corresponding to different addressees to whom page data are to be sent and so on, for each page of page data to be outputted will be described below.

Fig. 5 shows the flow of the processing of automatically selecting contents and acquiring data by extracting the necessary data from the database system and analyzing the extracted data. More specifically, the following processing is performed.

In the invention described in, for example, claim 5, the data stored in the database system includes data relative to a plurality of targets who are to be provided with automatically edited and outputted page data, and setting data for establishing association with contents for the purpose of automatically editing the page data for individual targets.

In addition, the invention described in claim 6 is characterized in that the data stored in the database system provided in the state of being connected to the user terminal are data including marketing data for outputting advertisement, direct mail, company information, catalogs or other page data for the individual targets.

An example in which the layout of direct mail of an automobile is edited will be described below.

Data such as the names of customers, the types of automobiles, purchase years and sales staff are stored in the database provided in the above-described user computer system.

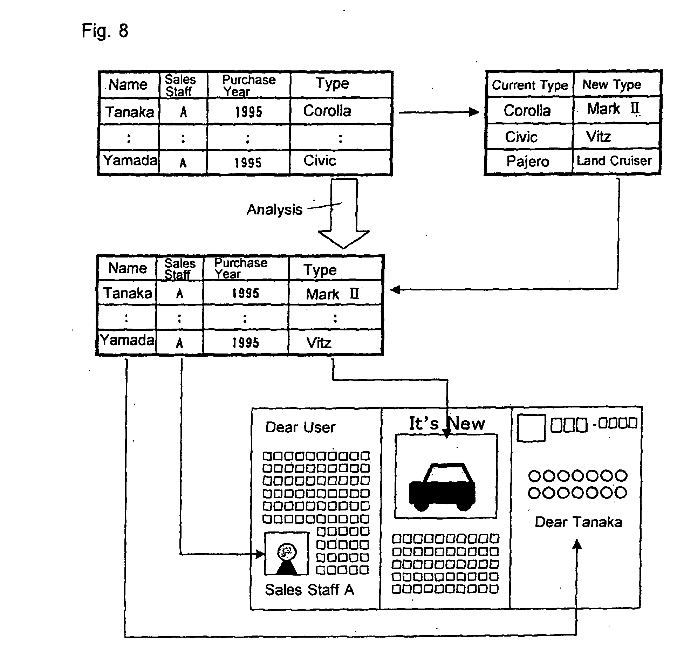

In Fig. 8, the setting data for establishing association with contents for the purpose of automatically editing the page data for individual targets are data which store defined association with new types of automobiles to be recommended through merchandise introduction by direct mail, according to the current types of automobiles possessed by individual customers. The setting data are association data which associate the current types of automobiles with the same rank or an immediately higher rank.

In the case where a multiplicity of customer data are stored in the database system, the association data are association data which are to be referred to during automatically editing and outputting so that contents indicative of new types of automobiles, which contents are associated with variable parts, are automatically edited and inserted according to the current types of automobiles of the respective customers, whereby pieces of direct mail to be sent to individual customers can be automatically edited and outputted.

These association data are merely one example, and can also be defined on the basis of annual incomes, occupations, family structure and other data.

Data are extracted, for example, by giving a condition such as "a list of users who purchased cars from a sales staff A in 1995" to extract the database.

In addition, contents to be arranged in the variable parts are automatically searched for, extracted and selected from the above-described contents server according to each condition.

The processing of creating and outputting a plurality of page data in accordance with above-described layout data is characterized in that the contents to be arranged in the variable parts included in the page data to be automatically edited are processed in such a manner that any one of the layouts is automatically selected and inserted for each of a plurality of outputs in accordance with the above-described association and the page data are outputted.

### (Automatic Editing System Embodiment 1)

The flow of the processing of automatically editing page data and performing accounting when output such as printing is performed, in the case where a user uses contents, such as images, of a contents server from a portal site will be described below.

As described above, the user who desires to use the contents connects to the portal site, such as by inputting an URL to a browser provided in the terminal of the user connected to a network.

The contents are stored in the contents server, and a commerce server accepts a processing request from the portal site or the like according to an act such as user selection of a content.

The processing of specifying the layout of page data, the processing of gaining access to the above-described contents database from the user terminal and performing acquisition of data for automatically selecting and outputting one or a plurality of desired contents from the contents database in accordance with the above-described association indicating which content is to be arranged in a variable part within the page data to be automatically edited, and the processing of automatically selecting a content and inserting the content into a variable part and providing an automatically edited output in the processing of creating and outputting a plurality of page data in accordance with the above-described layout data are common to the above-described processing, and the same description is omitted.

In the invention described in claims 7-9, regarding the automatically selected contents, data indicating how many and which contents have been outputted (such as the number of sheets and the amount of data) send the result of processing from the contents server to the commerce server on the basis of unique IDs provided in the contents.

Regarding accounting information (rules for accounting) for each of the contents, setting based on the sizes, resolutions and terms of validity of the respective contents such as images is performed in the commerce server in advance, and the commerce server (accounting server) manages the information for individual users and individual content IDs.

The accounting information for each of the contents includes accounting points based on, for example, classification, attributes and use methods which will be described below.

Namely, the accounting points are determined by content, by content size, by content output size (A0, A1, A2, A3, A4, ··), by resolution, by term of validity, byprint output target, by member or by license contract, or are based on other classifications, attributes and use methods.

The contents server manages registration information on the contents. The registration information on the contents is information which associates the locations of the contents, the genres, the data types, creators and owners of the contents, accounts into which to pay charged amounts and other information with the respective content IDs, and is stored in the commerce server.

The contents accounting system described in claim 7 will be described below.

This embodiment is, on a computer network, provided with a contents server for storing contents such as images, a portal web server to be accessed by a user to use and purchase contents, and a commerce server for managing information about users and information relative to the use and purchase of contents by the users, and each of the contents includes sample data of the content, data of the content body, accounting information relative to the price of the use of the content, attribute information relative to control of the use of the content, and a unique ID for identifying the content.

Output accounting is performed by the processing of allowing the above-described content to be displayed at the terminal of the user by the user, the processing of setting, when the user is to download the content, an authentication key for performing accounting relative to the user and controlling the use of the content, the processing of performing authentication on the user who accesses the above-described system, by using the authentication key, the processing of transmitting the content to the user terminal in response to content use request information specified and transmitted by the authenticated user and detecting attribute information included in the content at the user terminal, and the processing of decoding the content on the basis of the use request information and outputting the content, in the case where accounting processing based on the use request information is authenticated to output the content.

The authentication of accounting relative to the user is desirably performed with an authentication key using hardware (for example, a USB key). Namely, information for authentication is stored in hardware such as a USB key, and the information is set in the terminal of the user when accounting processing is to be performed.

The authentication key for performing accounting relative to the user and controlling the use of the user is set when the user is to use the content.

An ID for identifying the user is set in the authentication key (such as a USB key). In addition, money to be used by the user during accounting processing or the number of available points similar to money is set in the authentication key.

In addition, attribute information for restricting users of the contents or controlling the distribution and use of the contents is set.

Fig. 12 is a view showing information which is set in the IC chip of USB in the case where a USB key is used as one example of the authentication key.

Information such as unique ID, personal information, accounting information, log information and output information are set.

The authentication key can be provided with information for user authentication based on the method of using, a password, a one-time password which is usable only once, or a public key and a secret key, or various other authentication methods.

When the user uses the contents accounting system, the user uses points for calculating the amount of money or the like needed for accounting, and as described above, points are individually set for each of contents such as images by size, resolution, term and the like.

Information such as the above-described user ID stored in the authentication key, the above-described money stored in association with the user ID and the number of available points similar to the money can be managed for each of the users by the contents server (accounting server), and in this case, by collating both, it is possible to perform authentication of the users and management of accounting information for each of the users.

Then, the commerce server (authentication server) performs authentication, and determines from the result of the authentication whether to permit output and use of a content, and transmits the result of the processing from the commerce server to the web server which manages the portal site, and transmits an HTML file and the like for displaying the result of the authentication. Namely, the result of the authentication is displayed on the screen of the user terminal.

In addition, in the case where the result of the authentication indicates permission, the user terminal is specified as a destination terminal and an instruction to transmit the data of the content is transmitted from the commerce server to the contents server.

Namely, processing is executed by the processing of referring to contents registration information provided in the contents server, from the unique ID provided in the content selected and so on, and extracting the corresponding content stored in the contents server, and reading content data from the corresponding content and performing transmission of the data to the user terminal during automatic editing, and by reading the corresponding accounting information of the corresponding content and sending the processing result to the commerce server and also by updating information on the accounting points of the authentication key and sending the processing result from the commerce server to the contents server.

In addition, it is desirable that the use service log of outputs of the users be managed in the commerce server.

The content includes accounting information relative to the price of the use of the content and attribute information relative to control of the use of the content.

The contents used in this embodiment include attribute information for controlling the use of the contents.

An art has heretofore been known which correctly performs accounting management with accounting information and print target data included in received communication print data, so that accounting management can be correctly performed in a multiprotocol network printer.

In this manner, the network printer capable of performing accounting management is realized by using the multiprotocol communication print data including the accounting information and the print target data, but in the invention, the data of the content includes accounting information for performing accounting processing corresponding to the size, the resolution, the output method and the like of the content and attribute information for performing control and the like of the distribution and use of the content, such as user restriction based on whether users are members and restriction of output methods and the number of outputs.

The contents stored in the contents server are encoded in a predetermined data format, whereby the contents are protected so that the content bodies thereof cannot be used.

During outputting such as printing, i.e., at a stage where accounting processing is performed, users can output contents by the decoding of the contents.

In this manner, since the contents stored in the contents server are encoded in a predetermined data format, the contents server performs download processing, and then, in response to use request information for a content specified and transmitted by an authenticated user, transmits the content to a user terminal, and performs the processing of detecting attribute information included in the content at the user terminal.

In the case where the accounting processing based on the use request information is authenticated to output the content, output accounting is performed by the processing of decoding the content on the basis of the use request information and outputting the content.

In the case where the accounting processing based on the use request information is not authenticated, the system is characterized in that decoding and outputting of the content are impossible.

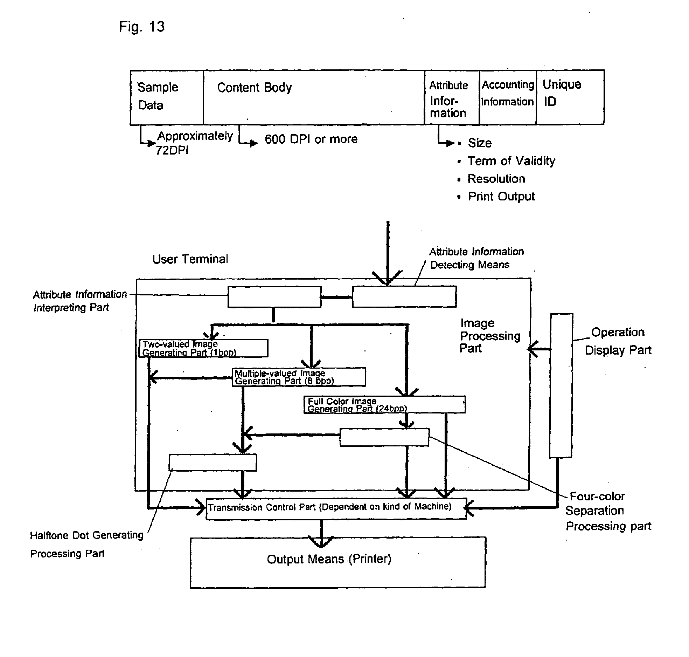

Fig. 13 is a block diagram showing one example of the flow of data along which, at a user terminal which acquires an image content, attribute information included in the content is detected and interpreted, and decoding and outputting are performed in accordance with the attribute information relative to the control of the use of the content.

As described above, it is desirable that the use service log of downloads of the user be managed in the contents server, and the use service log is transmitted from the user terminal to the system of the invention and is needed to complete the accounting processing on condition that output processing such as printing is correctly performed.

### (Automatic Editing System Embodiment 2)

The contents accounting system described in claim 7 will be described below.

This embodiment is, on a computer network, provided with a contents server for storing contents such as images, a portal web server to be accessed by a user to use and purchase contents, and a commerce server for managing information about users and information relative to the use and purchase of contents by the users, and each of the contents includes sample data of the content, URL information for locating a content body, accounting information relative to the price of the use of the content, attribute information relative to control of the use of the content, and a unique ID for identifying the content.

Output accounting is performed by the processing of allowing the above-described content to be displayed at the terminal of the user by the user, the processing of setting, when the user is to download the content, an authentication key for performing accounting relative to the user and controlling the use of the content, the processing of performing authentication on the user who accesses the above-described system, by using the authentication key, the processing of transmitting the content to the user terminal in response to content use request information specified and transmitted by the authenticated user and detecting attribute information included in the content at the user terminal, and the processing of decoding the content on the basis of the use request information and outputting the content, in the case where accounting processing based on the use request information is authenticated to output the content.

In the case where the accounting processing based on the use request information is not authenticated, the system is characterized in that decoding and outputting of the content are impossible.

In this embodiment, each of the contents includes the sample data of the content, the URL information for locating a content body, the accounting information relative to the price of the use of the content, the attribute information relative to the control of the use of the content, and the unique ID for identifying the content. The basic flow of the processing is common to the above-described accounting system embodiment 1.

In this embodiment, the contents are stored in the contents server in association with the unique IDs of content registration information managed by the commerce server, and since the URL information for locating the content bodies are included in place of the content data included in the contents, the data of the content bodies must be stored at locations specified by the URLs separately from the contents.

During outputting such as printing, i.e., at a stage where accounting processing is performed, users can output contents (i.e., not sample data but content bodies) by the decoding of the contents.

In this manner, since the contents stored in the contents server are encoded in a predetermined data format, in the automatic editing processing, the data of the above-described content is transmitted to a user terminal and the processing of detecting attribute information included in the content at the user terminal is performed.

In the case where the accounting processing based on the use request information is authenticated to output the content, output accounting is performed by the processing of decoding the content on the basis of the use request information and outputting the content.

In the case where the accounting processing based on the use request information is not authenticated, the system is characterized in that decoding and outputting of the content are impossible.

In addition, in the case of this embodiment, since the URL information for locating a content body is included, the data of the content body is stored at a location specified by the URL separately from the content.

Accordingly, the contents include the following embodiments in particular.

HTML files, XML files, CHTML files and the like all of which are files to be displayed on a web (including, particularly, a closed network such as an intranet) are contents themselves, and each of these files includes the above-described sample data of a content, URL information for locating a content body, accounting information relative to the price of the use of the content, attribute information relative to the control of the use of the content, and a unique ID for identifying the content.

The content body is present at a location specified by the URL.

In a tag in the source of a file to be uniquely defined, accounting information relative to the price of the use of a content, attribute information relative to the control of the use of the content, and a unique ID for identifying the content are included in the file. Unique tag definition is, in a file using, particularly, XML or the like, useful for performing content management in linkage to a database which stores a content body.

During the use of the content, transmission and reception of information are performed between the user terminal and the above-described system of the invention, and accounting information and attribute information defined by a tag are detected at the user terminal, and accounting processing is performed to allow output and use to be performed in the form where use such as outputting is possible.

### (Automatic Editing System Embodiment 3)

The contents accounting system described in claim 8 will be described below.

This embodiment is, on a computer network, provided with a contents server for storing contents such as images, a portal web server to be accessed by a user to use and purchase contents, and a commerce server for managing information about users and information relative to the use and purchase of contents by the users, and each of the contents includes sample data of the content, a content address ID for identifying the address of a content body on a network, accounting information relative to the price of the use of the content, attribute information relative to control of the use of the content, and a unique ID for identifying the content.

Output accounting is performed by the processing of allowing the above-described content to be displayed at the terminal of the user by the user, the processing of setting, when the user is to automatically edit the content, an authentication key for performing accounting relative to the user and controlling the use of the content, the processing of performing authentication on the user who accesses the above-described system, by using the authentication key, the processing of transmitting the content to the user terminal in response to content use request information specified and transmitted by the authenticated user and detecting attribute information included in the content at the user terminal, and the processing of decoding the content on the basis of the use request information and outputting the content, in the case where accounting processing based on the use request information is authenticated to output the content.

In the case where the accounting processing based on the use request information is not authenticated, the system is characterized in that decoding and outputting of the content are impossible.

In this embodiment, each of the contents includes the sample data of the content, the content address ID for identifying the address of the content body on the network, the accounting information relative to the price of the use of the content, the attribute information relative to the control of the use of the content, and the unique ID for identifying the content. The basic flow of the processing is common to the above-described automatic editing system embodiment 1.

In this embodiment, the contents are stored in the contents server in association with the unique IDs of content registration information managed by the commerce server, and since the content address IDs for identifying the addresses of the content bodies on the network are included in place of the content data included in the contents, the data of the content bodies must be stored at locations specified by the content address IDs separately from the contents.

During outputting such as printing, i.e., at a stage where accounting processing is performed, users can output contents (i.e., not sample data but content bodies) by the decoding of the contents.

In this manner, since the contents stored in the contents server are encoded in a predetermined data format, in the automatic editing processing, the data of the above-described content is transmitted to a user terminal and the processing of detecting attribute information included in the content at the user terminal is performed.

In the case where the accounting processing based on the use request information is authenticated to output the content, output accounting is performed by the processing of decoding the content on the basis of the use request information and outputting the content.

In the case where the accounting processing based on the use request information is not authenticated, the system is characterized in that decoding and outputting of the content are impossible.

In addition, in the case of this embodiment, since the content address ID for identifying the address of a content body on a network is contained, the data of the content body is stored at a location specified by the content identification ID separately from the content.

Accordingly, the contents include the following embodiments in particular.

HTML files, XML files, CHTML files and the like all of which are files to be displayed on a web (including, particularly, a closed network such as an intranet) are contents themselves, and each of these files includes the above-described sample data of a content, URL information for locating a content body, accounting information relative to the price of the use of the content, attribute information relative to the control of the use of the content, and a unique ID for identifying the content.

The content body is present at a location specified by the content identification ID.

In a tag in the source of a file to be uniquely defined, accounting information relative to the price of the use of a content, attribute information relative to the control of the use of the content, and a unique ID for identifying the content are included in the file. Unique tag definition is, in a file using, particularly, XML or the like, useful for performing content management in linkage to a database which stores a content body.

During the use of the content, transmission and reception of information are performed between the user terminal and the above-described system of the invention, and accounting information and attribute information defined by a tag are detected at the user terminal, and accounting processing is performed to allow output and use to be performed in the form where use such as outputting is possible.

Incidentally, in either case, the content outputting method includes the case where output is performed by a printer connected to the user terminal, the case where as the invention described in claim 12, an external storage device connected to the user terminal or an external storage device connected to the user terminal, or other outputting methods.

### Industrial Applicability

As described above in detail, according to the invention, it is possible to provide an automatic editing system in which when a user is to perform, by using contents, editing processes on various documents such as handbills, direct mail of companies and letters of advice and perform output such as printing on a paper medium or the like, the desired contents are searched for, extracted and selected, and in the case where a plurality of outputs are to be produced, the user performs setting in advance through a user-side database as to which contents are to be arranged in a variable part within page data to be automatically edited, whereby created page data are output.

In addition, according to the invention, it is possible to provide an automatic editing system in which when a user gains access to a computer network and is to make the desired layout, create page data and provide a plurality of outputs by using image files and other contents and layout information, association indicating which content is to be arranged in a variable part within the page data to be automatically edited is set in advance in a database of the user, to perform the processing of automatically selecting one or a plurality of desired contents from the user terminal and automatically inserting any of the contents into each of the plurality of outputs, and providing the plurality of outputs.

In addition, the above-described processing can be performed without performing the processing of temporarily downloading a content through the Internet or the processing of inserting the downloaded content into a layout.

Furthermore, it is possible to provide an automatic editing system in which accounting processing at the time of outputting or the like is performed by performing acquisition of data for selecting and outputting a content to be arranged in a layout for creating page data and performing automatic editing processing, and in addition, accounting processing corresponding to the size, the resolution, the output method and the like of the content can be performed, and in the case where accounting processing is not performed (namely, acquisition, output or the like of data is not performed), protection of the content is effected.

## Claims

1. An automatic editing system **characterized by** including:
a user computer system made of a system which includes a user terminal which is a client, a database provided in the state of being connected to the user terminal, and output means;
a computer network to which a user connects from the user terminal; and
a contents server to be accessed via the computer network,
the contents server being provided with a contents database in which contents are stored;
the user terminal being provided with an automatic editing system for editing page data;
the database system provided in the state of being connected to the user terminal storing data for setting association indicating which content is to be arranged in a variable part in the page data to be automatically edited when the page data are to be outputted in plural numbers; and
at the user terminal, the automatic editing system performing:
the processing of specifying a layout of the page data;
the processing of gaining access to the contents database from the user terminal and performing acquisition of data for automatically selecting and outputting one or a plurality of desired contents from the contents database in accordance with the association indicating which content is to be arranged in the variable part within the page data to be automatically edited; and
the processing of, in the processing of creating the page data in accordance with the layout data and providing a plurality of outputs, automatically selecting and inserting any of the contents into each of the plurality of outputs in accordance with the association as a content to be arranged in the variable part included in the page data to be automatically edited, and performing automatic editing and outputting.

2. An automatic editing system according to claim 1, **characterized in that** the contents server is provided with the contents database in which the contents are stored, and a layout information database in which layout information is stored.

3. An automatic editing system according to claim 1 or 2, **characterized in that** the contents server is constructed as a plurality of servers which are arranged in a distributed manner via the computer network.

4. An automatic editing system according to any of claims 1 to 3, **characterized in that** the contents stored in the contents server arranged in the distributed manner have a predetermined format data structure, and
**in that** in the processing of gaining access to the contents database from the user terminal and performing acquisition of data for automatically selecting and outputting one or a plurality of desired contents from the contents database via the user terminal in accordance with the association indicating which content is to be arranged in the variable part within the page data to be automatically edited,
the contents at least include data for searching for the contents in accordance with the association and performing decision processing as to which content is to be arranged in the variable part in the page data to be automatically edited.

5. An automatic editing system according to any of claims 1 to 4, **characterized in that** the data which are stored in the database system provided in the state of being connected to the user terminal and are used for setting the association indicating which content is to be arranged in the variable part within the page data to be automatically edited when the page data are to be outputted in plural numbers include data relative to a plurality of targets who are to be provided with automatically edited and outputted page data, and setting data for establishing association with contents for the purpose of automatically editing the page data for individual targets,
the page data automatically edited for the individual targets being outputted in accordance with the data stored in the database system.

6. An automatic editing system according to claim 5, **characterized in that** the data stored in the database system provided in the state of being connected to the user terminal are data including marketing data for outputting advertisement, direct mail, company information, catalogs or other page data for the individual targets.

7. An automatic editing system according to claims 1 to 6, **characterized in that** the database system provided in the state of being connected to the user terminal further stores data for setting the association indicative of which layout is suited for the content included in the page data to be automatically edited when the page data are to be outputted in plural numbers, and **in that** in the processing of creating and outputting a plurality of page data in accordance with the layout data, the content to be arranged in the variable part included in the page data to be automatically edited is processed in such a manner that any one of layouts is automatically selected and the content is inserted for each of a plurality of outputs in accordance with the association, and an automatically edited output is provided.

8. An automatic editing system according to claim 1 to 7, **characterized in that** the system is further provided with a commerce server for performing accounting management in linkage to the contents server,
the system performing accounting processing by outputting the created page data.

9. An automatic editing system according to claim 1 to 8,
**characterized in that** during the processing of performing accounting processing by performing output of the created page data, decoding of the content is performed at the user terminal.

10. An automatic editing system according to claim 1 to 9, **characterized in that** the contents are contents encoded in a unique format decodable with a decode key.

11. An automatic editing system according to claim 10, **characterized in that** the contents include attribute information for controlling the use of the contents and are decoded when control for restricting the use of the contents is cancelled with the decode key.

12. An automatic editing system according to claim 10 or 11, **characterized in that** decoding and accounting relative to the contents are performed specifying one or plurality of use conditions of the output methods, sizes of contents, resolutions, the number of outputs and other detailed conditions.

13. An automatic editing system according to any of claims 10 to 12, **characterized in that** each of the contents includes sample data of the content, data of a content body, accounting information relative to the price of the use of the content, attribute information relative to control of the use of the content, and a unique ID for identifying the content.

14. An automatic editing system according to any of claims 10 to 12, **characterized in that** each of the contents includes sample data of the content, URL information for locating a content body, accounting information relative to the price of the use of the content, attribute information relative to control of the use of the content, and a unique ID for identifying the content.

15. An automatic editing system according to any of claims 10 to 12, **characterized in that** each of the contents includes sample data of the content, a content address ID for identifying the address of a content body on a network, accounting information relative to the price of the use of the content, attribute information relative to control of the use of the content, and a unique ID for identifying the content.

16. An automatic editing system according to any of claims 1 to 14, **characterized in that** the processing in which the user selects the desired layout and selects the desired content from the contents performs the processing of performing search with a keyword or a content ID and extraction from the contents stored in the contents database and then selecting the desired content.

17. An automatic editing system according to any of claims 1 to 16, **characterized in that** the processing of performing authentication of the user when accounting processing is to be performed by outputting the created page data, the authentication is performed with a hardware key provided in the user terminal.
